# EUROPÄISCHE PATENTSCHRIFT

(11) **EP 0 561 162 B1**
(45) Veröffentlichungstag und Bekanntmachung des Hinweises auf die Patenterteilung: **15.05.1996**
(21) Anmeldenummer: 93102362.6
(22) Anmeldetag: 16.02.1993
(51) Int. Cl.: B60H 1/00, B60R 13/08, B60K 37/00

(54) **Klimatisierungsvorrichtung für abgestellte Personenkraftwagen**
Air conditioning device for parked vehicles
Dispositif de climatisation pour véhicules stationnés

(30) Priorität: 19.03.1992 DE 4208845
(43) Veröffentlichungstag der Anmeldung: 22.09.1993
(73) Patentinhaber: MERCEDES-BENZ AG, D-70327 Stuttgart (DE)
(72) Erfinder: Feierlein, Johannes, W-8011 Oberpframmern (DE)

(56) Entgegenhaltungen:
- DE-C- 3 643 690
- DE-C- 3 643 691
- US-A- 4 586 792
- PATENT ABSTRACTS OF JAPAN vol. 14, no. 193 (M-963)(4136) 19. April 1990 & JP-A-02 037 021 (YOSHINOBU TAKAHASHI)

## Beschreibung

Die Erfindung betrifft eine Klimatisierungsvorrichtung für abgestellte Personenkraftwagen unter Verwendung einer Folie mit steuerbarer Lichtdurchlässigkeit.

Eine Folie mit steuerbarer Lichtdurchlässigkeit ist aus der DE 36 43 690 C2 bekannt. Dort wird die Folie zur Fahrzeugverglasung, Gebäudeverglasung, für Komponenten der passiven Solarenergienutzung, als Anzeige- oder Bildelement oder für optische Gläser vorgeschlagen.

Die Klimatisierung von abgestellten Personenkraftwagen ist ein Problem, das bisher nicht befriedigend gelöst werden kann. Die Innenaufheizung bei einfallender Sonne erzeugt im abgestellten Fahrzeug Temperaturen von +60 °C und mehr, wodurch das Wohlbefinden der Passagiere nach dem Einsteigen erheblich beeinträchtigt wird. Da nicht nur die Luft, sondern auch die Inneneinrichtung, Insbesondere das Armaturenbrett und die Hutablage, erhitzt sind, kühlt sich das Wageninnere auch bei Durchzug nur langsam ab. Klimaanlagen können im Stand wegen des hohen Energiebedarfs nicht eingesetzt werden. Auch wärmedämmende Scheiben verhindern das Aufheizen des Wageninneren erfahrungsgemäß nur unbefriedigend.

Der Erfindung liegt die Aufgabe zugrunde, eine Klimatisierungsvorrichtung der eingangs genannten Art zu schaffen, mit der eine Aufheizung des Fahrzeuges durch Sonneneinstrahlung im Stillstand effektiv reduziert wird.

Die Lösung dieser Aufgabe erfolgt erfindungsgemäß mit den Merkmalen des Anspruchs 1. Vorteilhafte Ausbildungen der Erfindung sind durch die Unteransprüche gekennzeichnet.

Der wesentliche Vorteil der Erfindung ist, daß die der Sonnenstrahlung direkt ausgesetzten Teile, wie Armaturenbrett, Konsolen und Hutablage bei abgestelltem Fahrzeug das Sonnenlicht reflektieren, um die Aufheizung des Wageninneren zu verhindern, und im Fahrbetrieb matt und dunkel gefärbt sind, um Reflexionen an den Scheiben zu vermeiden. Dies wird in überraschend einfacher Weise dadurch erreicht, daß die aus der Folie mit steuerbarer Lichtdurchlässigkeit, der reflektierenden Schicht und dem Trägermaterial bestehenden Matte auf die der Sonneneinstrahlung besonders ausgesetzten Teile Im Fahrzeuginneren aufgebracht wird. Die Umschaltung des Betriebszustandes der Folie erfolgt in einfacher Weise in Abhängigkeit von der Stellung des Zündschlosses mit Hilfe eines Relais, wobei der Schaltzustand, in dem die Folie transparent ist, bei abgefallenem Relais erreicht wird. Die Steuerung der Folie ist praktisch verlustlos und belastet somit die Fahrzeugbatterie nur unwesentlich.

Die Erfindung wird nachfolgend anhand eines in der Zeichnung dargestellten Ausführungsbeispiels näher erläutert. Es zeigen:
- Fig. 1: das Oberteil eines Personenkraftwagen mit im wesentlichen der Sonnenstrahlung ausgesetzten Teilen;
- Fig. 2: der Aufbau einer Klimatisierungsvorrichtung für den Personenkraftwagen und
- Fig. 3: eine Matte für die Klimatisierungsvorrichtung nach Fig. 2 bei abgestelltem Motor.

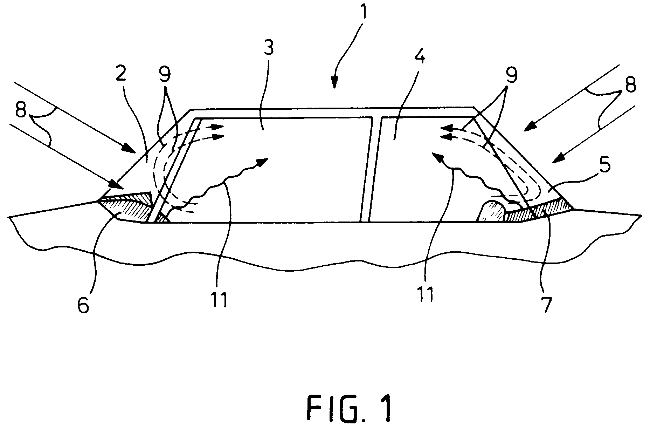

Die Fig. 1 zeigt ein Oberteil eines Personenkraftwagens 1 mit einer Windschutzscheibe 2, zwei Seitenscheiben 3 und 4 und einer Heckscheibe 5. Innerhalb des Wagens sind ein Armaturenbrett 6 und eine Hutablage 7 ersichtlich. Durch eine, mit Pfeilen 8 angedeutete Sonneneinstrahlung erhitzen sich das in dunklen Tönen gehaltene Armaturenbrett 6 und die Hutablage 7, wodurch Konvektionswärme, angedeutet durch Pfeile 9 und Strahlungswärme entsprechend den Pfeilen 11 entsteht. Die dabei im Stand entstehende Wärme im PKW 1 kann 60 °C und mehr betragen. Während der Fahrt kann sich durch Lüftung oder die geöffneten Fenster 3 und 4 keine größere Wärme entwickeln.

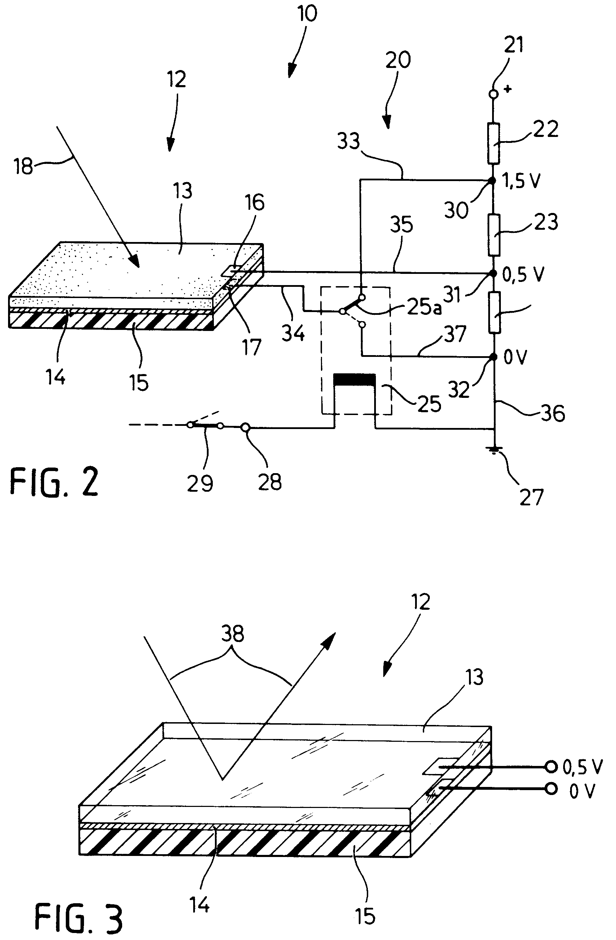

Durch eine Klimatisierungsvorrichtung 10 entsprechend Fig. 2 ist es möglich, die im Stand auftretende Wärme bei Sonneneinstrahlung im PKW 1 entscheidend herabzusetzen. Die Vorrichtung 10 besteht aus einer Matte 12 und einer Schalteinrichtung 20. Die Matte 12 ist aufgebaut aus einer obenliegenden Folie mit steuerbarer Lichtdurchlässigkeit 13, einer reflektierenden Schicht 14 aus z.B. Aluminium und einem Trägermaterial 15 aus z.B. Kunststoff. Die Folie 13 hat zwei Elektroden 16 und 17. Durch einen Pfeil 18 ist angedeutet, daß einfallendes Licht an der matten Folie absorbiert wird.

Die Schalteinrichtung 20 besteht aus einem Anschlußpunkt 21 an eine nicht dargestellte Batterie, drei Widerständen 22, 23, und 24, einem Relais 25, einem Masseanschluß 27 und einem Anschlußpunkt 28 für das Zündschloß, welches durch einen Schalter 29 angedeutet ist. Im Relais 25 ist ein Schalter 25a. Die Widerstände 22, 23 und 24 sind so bemessen, daß am Punkt 30 eine Spannung von etwa 1,5 V, am Punkt 31 eine Spannung von etwa 0,5 V und am Punkt 32 Null Volt anliegt. Weiterhin ist das Relais 25 angezogen, wie in Fig. 2 dargestellt, wenn das Zündschloß 29 betätigt ist.

Funktionsweise: In der Darstellung der Fig. 2 fließt ein Strom vom Anschlußpunkt 21 der Batterie über Widerstand 22, Punkt 30, Leitung 33, Schalter 25a, Leitung 34, durch die Folie 13, Leitung 35, Punkt 31, Widerstand 24, Leitung 36 an die Masse 27. An der Folie 13 liegt somit bei eingeschaltetem Zündschloß 29 und angezogenem Relais 25 eine Spannung von +1 V an. Bei dieser Spannung, die dem Fahrbetrieb des PKW 1 entspricht, ist die Folie 13 dunkel und absorbiert das einfallende Licht 18. Bei dem strichpunktiert dargestellten ausgeschalteten Zündschloß 29, bei dem das Relais 25 stromlos wird und sein Schalter 25a in der strichpunktierten Stellung liegt, fließt der Strom vom Punkt 21 über Widerstand 22, Widerstand 23, Punkt 31, Leitung 35, Folie 13, Leitung 34, abgefallener Schalter 25a, Leitung 37, Punkt 32, Leitung 36 an die Masse 27. An der Folie 13 liegt somit bei ausgeschaltetem Zündschloß 29, also im Stand des PKW 1, eine Spannung von -0,5 V. Dieser Zustand der Folie 13 ist entsprechend Fig. 3 lichtdurchlässig, so daß einfallendes Licht, dargestellt durch den Pfeil 38, an der glänzenden Metallfolie 14, reflektiert wird. Dadurch kann die Matte 12 und das Teil, wie Armaturenbrett 6 oder Hutablage 7, auf dem sie aufgeklebt ist, sich nicht erwärmen.

## Patentansprüche

1. Klimatisierungsvorrichtung für abgestellte Personenkraftwagen unter Verwendung einer Folie (13) mit steuerbarer Lichtdurchlässigkeit, **gekennzeichnet** durch die nachfolgenden Merkmale:
- die Folie (13) ist mit einer reflektierenden Schicht (14) verbunden;
- die Folie (13) mit der reflektierenden Schicht (14) ist mit einem Trägermaterial (15) zu einer Matte (12) verbunden, die Im Inneren des Personenkraftwagens (1) auf der Sonneneinstrahlung (8) direkt ausgesetzten Teilen (6,7) aufgebracht ist;
- im Stand bei abgestelltem Motor ist die Folie (13) in den lichtdurchlässigen Zustand gesteuert, wodurch das einfallende Licht (38) an der reflektierenden Schicht (14) reflektiert wird;
- im Fahrbetrieb des Personenkraftwagens (1) ist die Folie (13) in den lichtundurchlässigen Zustand gesteuert, wodurch einfallendes Licht (18) von dieser absorbiert wird.

2. Klimatisierungsvorrichtung nach Anspruch 1, **dadurch gekennzeichnet,** daß die reflektierende Schicht (14) aus einer Metallfolie, z.B. aus Aluminium, besteht.

3. Klimatisierungsvorrichtung nach Anspruch 1, **dadurch gekennzeichnet,** daß die Umschaltung des Betriebszustandes der Folie (13) in Abhängigkeit von der Stellung eines Zündschlosses (29) mit Hilfe eines Relais (25) erfolgt.

4. Klimatisierungsvorrichtung nach den Ansprüchen 1 bis 3, **dadurch gekennzeichnet,** daß bei ausgeschaltetem Zündschloß (29) das Relais (25) abfällt, womit über eine Schalteinrichtung (20) an der Folie (13) eine Spannung von etwa -0,5 V anliegt, die die Lichtdurchlässigkeit der Folie (13) bewirkt.

5. Klimatisierungsvorrichtung nach den Ansprüchen 1 bis 3, **dadurch gekennzeichnet,** daß bei eingeschaltetem Zündschloß (29) das Relais (25) anzieht, womit über die Schalteinrichtung (20) an der Folie (13) eine Spannung von etwa +1 V anliegt, die die Lichtundurchlässigkeit der Folie bewirkt.

## Claims

1. An air conditioning device for passenger cars with the engine switched off using a film with controllable light transmission capacity, **characterised by** the following features:
- the film (13) is attached to a reflective layer (14);
- the film (13) with the reflective layer (14) is attached to a base material (15) to a form a mat (12) which is used to cover the parts (6, 7) of the interior of the passenger car which are exposed to direct sunlight (8);
- when the car is stationary and the engine is switched off the film (13) is switched to light transmitting mode whereby the reflective layer (14) reflects any incident light (38);
- when the engine of the passenger car (1) is switched on the film (13) is switched to non-light transmitting mode whereby it absorbs any incident light (38).

2. An air conditioning device in accordance with claim 1, **characterised in that** the reflective layer (14) consists of a metal film made, for example, of aluminium.

3. An air conditioning device in accordance with claim 1, **characterised in that** the operating mode of the film (13) is controlled by means of a relay (25) in accordance with the position of an ignition block (29).

4. An air conditioning device in accordance with claims 1 to 3, **characterised in that** when the ignition block (29) is switched off the relay (25) opens, a voltage of approx. - 0.5 V is generated, activating the light transmission capacity of the film (13) by means of a switchgear (20) in the film (13).

5. An air conditioning device in accordance with claims 1 to 3, **characterised in that** when the ignition block (29) is switched on the relay (25) closes, a voltage of approx. + 1 V is created, activating the light transmission capacity of the film (13) by means of a switchgear (20) in the film (13).

## Revendications

1. Dispositif de climatisation pour des voitures de tourisme à l'arrêt, qui utilise une feuille dont la transparence à la lumière est commandable, caractérisé par les caractéristiques suivantes :
- la feuille (13) est réunie à une couche réfléchissante (14);
- la feuille (13) pourvue de la couche réfléchissante (14) est reliée à un matériau de support (15) pour former une nappe (12), qui est disposée à l'intérieur de la voiture de tourisme (1), sur des parties (6,7) soumises directement au rayonnement solaire (8) ;
- dans l'état dans lequel le moteur est arrêté, la feuille (13) est commandée pour prendre l'état transparent, ce qui a pour effet que la lumière incidente (38) est réfléchie sur la couche réfléchissante (14) ;
- lorsque la voiture automobile (1) est en route, la feuille (13) est commandée pour prendre l'état opaque, ce qui a pour effet que la lumière incidente (18) est absorbée par cette feuille.

2. Dispositif de climatisation selon la revendication 1, caractérisé en ce que la couche réfléchissante (14) est constituée par une feuille métallique, par exemple en aluminium.

3. Dispositif de climatisation selon la revendication 1, caractérisé en ce que la commutation de l'état de fonctionnement de la feuille (13) s'effectue en fonction de la position d'un interrupteur d'allumage (29) à l'aide d'un relais (25).

4. Dispositif de climatisation selon les revendications 1 à 3, caractérisé en ce que, lorsque l'interrupteur d'allumage (29) est ouvert, le relais (25) retombe, ce qui a pour effet qu'à la feuille (13) est appliquée, par l'intermédiaire d'un dispositif de commutation (20), une tension d'environ -0,5 V, qui place la feuille (13) dans l'état transparent.

5. Dispositif de climatisation selon les revendications 1 à 3, caractérisé en ce que lorsque l'interrupteur d'allumage (29) est fermé, le relais (25) est attiré, ce qui a pour effet qu'à la feuille (13) est appliquée, par l'intermédiaire du dispositif de commutation (20), une tension d'environ +1 V, qui place la feuille dans l'état opaque.
